# EUROPÄISCHE PATENTSCHRIFT

(11) **EP 3 538 420 B1**
(45) Veröffentlichungstag und Bekanntmachung des Hinweises auf die Patenterteilung: **23.12.2020**
(21) Anmeldenummer: 17797315.3
(22) Anmeldetag: 08.11.2017
(51) Int. Cl.: B62D 5/04, B62D 3/12

(54) **ZAHNSTANGENLENKUNG FÜR EIN KRAFTFAHRZEUG MIT SCHNECKENGETRIEBE**
RACK-AND-PINION STEERING SYSTEM FOR A MOTOR VEHICLE HAVING A WORM GEAR SET
DIRECTION À CRÉMAILLÈRE POUR VÉHICULE À MOTEUR DOTÉE D'UN ENGRENAGE À VIS SANS FIN

(30) Priorität: 09.11.2016 DE 102016013269
(43) Veröffentlichungstag der Anmeldung: 18.09.2019
(73) Patentinhaber: thyssenkrupp Presta AG, 9492 Eschen (LI); thyssenkrupp AG, 45143 Essen (DE)
(72) Erfinder: STECK, Philippe, 9487 Gamprin-Bendern (LI); BAUMGARTNER, Patrick, 9000 St. Gallen (CH)
(74) Vertreter: thyssenkrupp Intellectual Property GmbH
(86) Internationale Anmeldenummer: PCT/EP2017/078543
(87) Internationale Veröffentlichungsnummer: WO 2018/087117

(56) Entgegenhaltungen:
- JP-A- 2009 120 094
- JP-A- 2014 169 079
- JP-A- 2015 178 295
- US-A1- 2013 180 794

## Beschreibung

Die vorliegende Erfindung betrifft eine Zahnstangenlenkung für ein Kraftfahrzeug mit den Merkmalen des Oberbegriffs des Anspruchs 1.

Gattungsgemäße Zahnstangenlenkungen weisen eine in einem Lenkgetriebegehäuse linear beweglich geführte Zahnstange und ein drehbar gelagertes Lenkritzel auf, das mit der Zahnstange in Eingriff steht. Das von einem Fahrer auf ein Lenkrad ausgeübte Lenkdrehmoment wird über eine Lenkwelle auf eine Eingangswelle des Lenkgetriebes übertragen. Die Eingangswelle des Lenkgetriebes ist mit einem Lenkritzel verbunden, das mit der Zahnstange kämmt. Eine Drehung der Eingangswelle und des Lenkritzels wird über den Zahneingriff an der Zahnstange in eine Linearbewegung der Zahnstange umgewandelt. An der Zahnstange sind Spurstangen angelenkt, mit deren Hilfe die gelenkten Räder um einen Einschlagwinkel verstellt werden. Die Drehung des Lenkrades wird so in eine Lenkbewegung der gelenkten Räder umgesetzt. Bei elektrisch unterstützten Zahnstangenlenkungen ist ein Servomotor vorgesehen, der beispielsweise mittels eines mechanischen Untersetzungsgetriebes mit Schnecke und Schneckenrad auf das Lenkritzel einwirkt und somit den Fahrer bei einem Lenkmanöver unterstützt. Der Servomotor ist dabei zwischen der Eingangswelle und dem Lenkritzel angeordnet. Diese Anordnung kann sich allerdings als nachteilig erweisen, da sie viel Bauraum benötigt.

Aus der US 2013/180794 A1 ist eine gattungsgemäße Zahnstangenlenkung bekannt. Diese erfordert relativ viel Bauraum.

Es ist deshalb Aufgabe der vorliegenden Erfindung, eine Zahnstangenlenkung für ein Kraftfahrzeug mit einem kompakten Lenkgetriebe anzugeben, das wenig Bauraum benötigt.

Demnach ist eine Zahnstangenlenkung für ein Kraftfahrzeug, umfassend eine mit einer Lenkwelle verbundene Ritzelwelle, die ein Lenkritzel aufweist, welches mit einer in einem Gehäuse entlang einer Längsachse verschieblich gelagerten Zahnstange zur Verschwenkung von lenkbaren Rädern in Eingriff steht, und mit einem Elektromotor, der die Ritzelwelle über ein Untersetzungsgetriebe antreibt, wobei die Lenkwelle, die Ritzelwelle mit dem Lenkritzel und das Untersetzungsgetriebe eine Gesamtanordnung bilden, welche in einem Lenkgetriebegehäuse aufgenommen ist, vorgesehen, wobei das Untersetzungsgetriebe am lenkwellenfernen Ende der Ritzelwelle angeordnet ist, wobei die Ritzelwelle zwischen dem Lenkritzel und dem lenkwellenfernen Ende in einem Lager drehbar in dem Lenkgetriebegehäuse gelagert ist.

Die Anordnung des Untersetzungsgetriebes auf der lenkwellenfernen Seite der Ritzelwelle ist besonders günstig, da dadurch wenig Bauraum benötigt wird. Vorzugsweise ist das Untersetzungsgetriebe auf der Ritzelwelle unterhalb des Lenkritzels angeordnet und damit auf der entgegengesetzten Seite zu der Eingangswelle. Dabei ist es bevorzugt, wenn der Elektromotor ebenfalls auf der Unterseite des Lenkgetriebes angeordnet ist. Als Unterseite ist dabei die Seite des Lenkgetriebes in Richtung der Fahrbahn zu verstehen. Das Untersetzungsgetriebe und der Elektromotor liegen somit unterhalb der Zahnstange und auf der Seite der Fahrbahn, was besonders platzsparend ist.

Es ist weiterhin bevorzugt, wenn die Ritzelwelle an ihrem lenkwellennahen Ende mit einem Torsionsstab verbunden ist, der die Ritzelwelle mit einer Eingangswelle verbindet, wobei der Torsionsstab Teil eines Drehmomentsensors ist, der das zur Ansteuerung des Elektromotors benötigte am Lenkrad aufgebrachte Lenkmoment bestimmt und wobei das Untersetzungsgetriebe und der Elektromotor auf der gegenüberliegenden Seite der Zahnstange von dem Drehmomentsensor angeordnet sind. Durch die räumliche Trennung des Drehmomentsensors und des Antriebs kann das Lenkgetriebe noch kompakter ausgestaltet sein.

In einer bevorzugten Ausführungsform ist das Untersetzungsgetriebe ein Schneckengetriebe, wobei ein Schneckenrad des Schneckengetriebes die Ritzelwelle konzentrisch umgibt und mit dieser drehfest verbunden ist.

Es kann weiterhin vorgesehen sein, dass die Ritzelwelle zwischen dem Lenkritzel und dem Schneckenrad in einem Lager drehbar in dem Lenkgetriebegehäuse gelagert ist.

Vorzugsweise ist der Elektromotor ein elektrischer Servomotor, der eine Schneckenwelle des Schneckengetriebes antreibt.

Zur vereinfachten Montage des Lenkgetriebes kann es vorgesehen sein, dass die Ritzelwelle zwischen dem Lenkritzel und dem Lager eine Verjüngung aufweist, deren Durchmesser geringer ist als der des Lenkritzels und eines Lagersitzes des Lagers. Die Zahnstange kann somit an dem Ritzel, im Bereich der Verjüngung vorbei in das Gehäuse eingesetzt werden. Vorzugsweise schließt sich in diesem Fall die Verjüngung unmittelbar an das Lenkritzel auf der Ritzelwelle an.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung einer Zahnstangenlenkung,
- Fig. 2:: eine räumliche Ansicht des Lenkgetriebes aus Fig. 1,
- Fig. 3:: eine detaillierte Darstellung der Anordnung des Schneckengetriebes der Lenkunterstützung mit Zahnstange und Lenkritzel,
- Fig. 4:: eine Darstellung des Eingriffs zwischen Lenkritzel und Zahnstange mit Schneckengetriebe, sowie
- Fig. 5:: ein Längsschnitt der Zahnstangenlenkung.

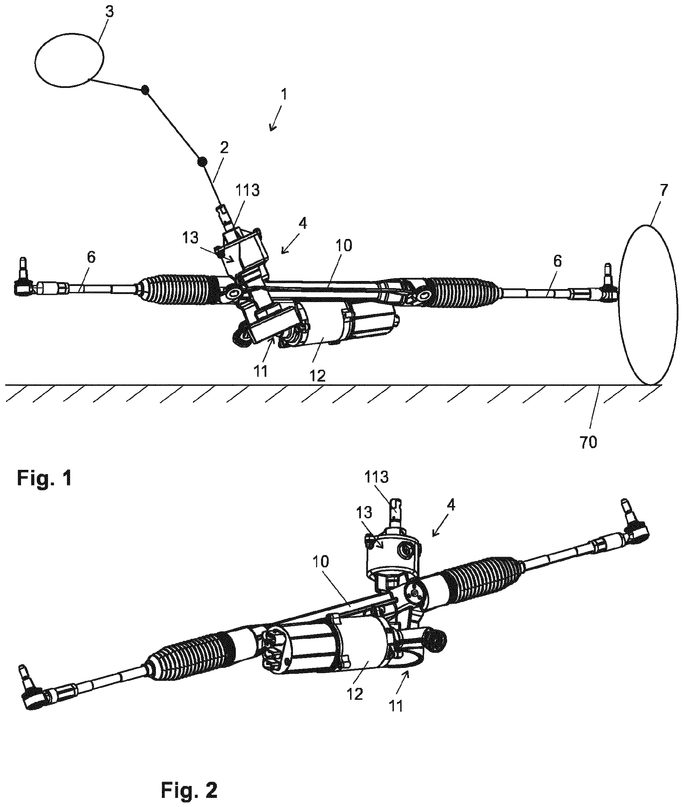

In der Figur 1 ist schematisch eine Zahnstangenlenkung 1 eines Kraftfahrzeuges gezeigt. Eine Lenkwelle 2 dient der Übertragung der von einem Fahrer des Kraftfahrzeugs am Lenkrad 3 ausgeführten Lenkbewegungen auf ein Zahnstangenlenkgetriebe 4. Das Zahnstangenlenkgetriebe 4 setzt die Drehbewegung der Lenkwelle 2 in eine Bewegung einer Zahnstange 5 um, wodurch das an einer Spurstange 6 angelenkte Rad 7 des Fahrzeugs einen Lenkeinschlag ausführt. Die Drehbewegung der Lenkwelle 2 wird über ein Lenkritzel 8, dass mit der Zahnstange 5 in einem Verzahnungsbereich 9 kämmt, in eine translatorische Bewegung der Zahnstange 5 umgesetzt. Die Zahnstange 5 ist in einem Lenkgetriebegehäuse 10 axial beweglich gelagert. Auf einer lenkwellenfernen Seite der Zahnstange 5 sind ein Untersetzungsgetriebe 11 und ein elektrischer Servomotor 12 angeordnet. Der Servomotor 12 wirkt über das Untersetzungsgetriebe 11 auf das Lenkritzel 8 zur Lenkunterstützung.

In der Figur 2 ist in einer zweiten Ansicht die Lage des Untersetzungsgetriebes 11 und des Servomotors 12 unterhalb der Zahnstange 5 dargestellt.

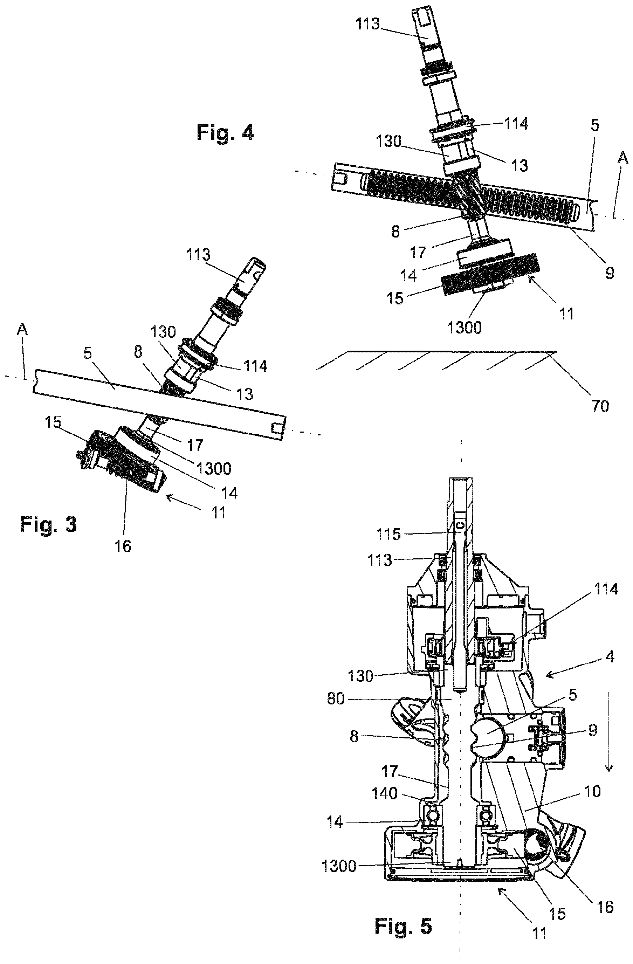

Die Figuren 3 und 4 zeigen zwei unterschiedliche Ansichten des Eingriffs des Lenkritzels 8 in den Verzahnungsbereich 9 der Zahnstange 5. Das Lenkritzel 8 ist auf einer Ritzelwelle 13 angeordnet, die ein lenkwellennahes Ende 130 und ein lenkwellenfernes Ende 1300 aufweist. Das lenkwellennahe Ende 130' ist, wie in Figur 5 dargestellt, mit einem Torsionsstab 115 verbunden, der die Ritzelwelle 13 mit einer Eingangswelle 113 verbindet, die wiederum mit dem Lenkrad 3 über die Lenkwelle 2 drehfest in Verbindung steht. Der Torsionsstab 115 bewirkt in Abhängigkeit vom Lenkraddrehmoment eine relative Verdrehung zwischen der Eingangswelle 113 und der Ritzelwelle 13. Der Torsionsstab 115 ist Teil eines Drehmomentsensors 114, der das zur Ansteuerung des Elektromotors 12 benötigte am Lenkrad 3 aufgebrachte Lenkmoment bestimmt. Die Ritzelwelle 13 ist zwischen dem Lenkritzel 8 und dem lenkwellenfernen Ende 1300 in einem Lager 14 drehbar in dem Lenkgetriebegehäuse 10 gelagert. Am lenkwellenfernen Ende 1300 der Ritzelwelle 13 ist ein Schneckenrad 15 des Untersetzungsgetriebes 11 vorgesehen, das die Ritzelwelle 13 konzentrisch umgibt und mit dieser drehfest verbunden ist. Der hier nicht dargestellte elektrische Servomotor treibt eine Schneckenwelle 16 an, die mit dem auf der Ritzelwelle 13 angeordneten Schneckenrad 15 kämmt. Da das Schneckengetriebe 11 am lenkwellenfernen Ende 1300 der Ritzelwelle 13 und somit unterhalb des Ritzels 8 liegend angeordnet ist, kann der Servomotor 12 ebenfalls auf der Unterseite des Lenkgetriebes und zwar näher zur Fahrbahn 70, im Vergleich zur Zahnstange 5, liegend, angebracht werden, was besonders platzsparend ist.

Zwischen Lenkritzel 8 und Lager 14 oder zwischen Lenkritzel 8 und dem Schneckenrad 16 weist die Ritzelwelle 13 eine Verjüngung 17 auf, deren Durchmesser geringer ist als der des Lenkritzels 8 und eines Lagersitzes 140 des Lagers 14. Die Verjüngung 17 schließt sich bevorzugt unmittelbar an das Lenkritzel 8 an. Bei der Montage wird die Eingangswelle 2 mit Torsionsstab 115 und Lenkritzel 8 in eine dafür vorgesehene Gehäuseöffnung des Lenkgetriebegehäuses 10 geschoben und zwar so weit, dass sich der Bereich der Verjüngung 17 der Ritzelwelle 13 auf Höhe der einzusetzenden Zahnstange 5 befindet. In einem zweiten Schritt wird die Zahnstange 5 in die entsprechend dafür vorgesehene Gehäuseöffnung eingeschoben. Die Zahnstange 5 kann an der Verjüngung 17 der Ritzelwelle 13 vorbei geschoben werden bis in eine Endposition. Die Ritzelwelle 13 wird anschließend nach unten in Richtung der Fahrbahn 70, weiter hinein in das Lenkgetriebegehäuse 10 bis zu einer Endposition gedrückt, so dass der Verzahnungsbereich 9 der Zahnstange 5 in Eingriff mit der Verzahnung 8 des Lenkritzels kommt. Der Zahnstangen-Ritzelmechanismus kann so besonders einfach in dem Lenkgetriebegehäuse montiert werden.

Das Lenkgetriebegehäuse ist bevorzugt einteilig mit dem Antriebsgetriebegehäuse, in dem das Untersetzungsgetriebe 12 aufgenommen ist, ausgestaltet und aus Aluminium oder Magnesium oder Kunststoff hergestellt. Das einteilige Design hat den Vorteil, dass die Dichtstelle von Antriebsgetriebegehäuse zu Lenkgetriebegehäuse entfällt. Zudem ist ein einteiliges Gehäuse sehr kosteneffizient herzustellen und es bringt deutliche Gewichtsersparnis.

## Patentansprüche

1. Zahnstangenlenkung für ein Kraftfahrzeug umfassend eine mit einer Lenkwelle (2) verbundene Ritzelwelle (13), die ein Lenkritzel (8) aufweist, welches mit einer in einem Gehäuse (10) entlang einer Längsachse (A) verschieblich gelagerten Zahnstange (5) zur Verschwenkung von lenkbaren Rädern (70) in Eingriff steht, und mit einem Elektromotor (12), der die Ritzelwelle (13) über ein Untersetzungsgetriebe (11) antreibt, wobei die Lenkwelle (2), die Ritzelwelle (13) mit dem Lenkritzel (8) und das Untersetzungsgetriebe (11) eine Gesamtanordnung bilden, welche in einem Lenkgetriebegehäuse (10) aufgenommen ist, wobei das Untersetzungsgetriebe (11) am lenkwellenfernen Ende (1300) der Ritzelwelle (13) angeordnet ist, wobei die Ritzelwelle (13) zwischen dem Lenkritzel (8) und dem lenkwellenfernen Ende (1300) in einem Lager (14) drehbar in dem Lenkgetriebegehäuse (10) gelagert ist, **dadurch gekennzeichnet dass** die Ritzelwelle (13) zwischen dem Lenkritzel (8) und dem Lager (14) eine Verjüngung (17) aufweist, deren Durchmesser geringer ist als der des Lenkritzels (8) und eines Lagersitzes (140) des Lagers (14).

2. Zahnstangenlenkung nach Anspruch 1, **dadurch gekennzeichnet, dass** das Untersetzungsgetriebe (11) auf der Ritzelwelle (13) unterhalb des Lenkritzels (8) angeordnet ist.

3. Zahnstangenlenkung nach Anspruch 1 oder 2, **dadurch gekennzeichnet, dass** der Elektromotor (12) auf der Unterseite des Lenkgetriebes (4) angeordnet ist.

4. Zahnstangenlenkung nach einem der vorhergehenden Ansprüche, **dadurch gekennzeichnet, dass** die Ritzelwelle (13) an ihrem lenkwellennahen Ende (130) mit einem Torsionsstab (115) verbunden ist, der die Ritzelwelle (13) mit einer Eingangswelle (113) verbindet, wobei der Torsionsstab (115) Teil eines Drehmomentsensors (114) ist, der das zur Ansteuerung des Elektromotors (12) benötigte am Lenkrad aufgebrachte Lenkmoment bestimmt und wobei das Untersetzungsgetriebe (11) und
der Elektromotor (12) auf der gegenüberliegenden Seite der Zahnstange (5) von dem Drehmomentsensor (114) angeordnet sind.

5. Zahnstangenlenkung nach einem der vorhergehenden Ansprüche, **dadurch gekennzeichnet, dass** das Untersetzungsgetriebe (11) ein Schneckengetriebe ist, wobei ein Schneckenrad (15) des Schneckengetriebes die Ritzelwelle (13) konzentrisch umgibt und mit dieser drehfest verbunden ist.

6. Zahnstangenlenkung nach Anspruch 5, **dadurch gekennzeichnet, dass** die Ritzelwelle (13) zwischen dem Lenkritzel (8) und dem Schneckenrad (15) in einem Lager (14) drehbar in dem Lenkgetriebegehäuse (10) gelagert ist.

7. Zahnstangenlenkung nach Anspruch 5 oder 6, **dadurch gekennzeichnet, dass** der Elektromotor (12) ein elektrischer Servomotor ist, der eine Schneckenwelle (16) des Schneckengetriebes antreibt.

8. Zahnstangenlenkung nach einem der vorhergehenden Ansprüche, **dadurch gekennzeichnet, dass** die Verjüngung (17) sich unmittelbar an das Lenkritzel (8) auf der Ritzelwelle (13) anschließt.

## Claims

1. Rack and pinion steering system for a motor vehicle comprising a pinion shaft (13) which is connected to a steering shaft (2) and has a steering pinion (8) which is in engagement with a rack (5) which is mounted in a housing (10) such that it can be displaced along a longitudinal axis (A) for pivoting steerable wheels (70), and having an electric motor (12) which drives the pinion shaft (13) via a step-down gear mechanism (11), wherein the steering shaft (2), the pinion shaft (13) with the steering pinion (8), and the step-down gear mechanism (11) form an overall arrangement which is received in a steering gear housing (10), wherein the step-down gear mechanism (11) is arranged at that end (1300) of the pinion shaft (13) which is remote from the steering shaft, wherein the pinion shaft (13) is mounted rotatably in a bearing (14) in the steering gear housing (10) between the steering pinion (8) and the end (1300) which is remote from the steering shaft, **characterized in that** the pinion shaft (13) has a tapered portion (17) between the steering pinion (8) and the bearing (14), the diameter of which tapered portion (17) is smaller than that of the steering pinion (8) and a bearing seat (140) of the bearing (14).

2. Rack and pinion steering system according to Claim 1, **characterized in that** the step-down gear mechanism (11) is arranged on the pinion shaft (13) below the steering pinion (8).

3. Rack and pinion steering system according to Claim 1 or 2, **characterized in that** the electric motor (12) is arranged on the underside of the steering gear (4).

4. Rack and pinion steering system according to one of the preceding claims, **characterized in that,** at its end (130) which is close to the steering shaft, the pinion shaft (13) is connected to a torsion bar (115) which connects the pinion shaft (13) to an input shaft (113), wherein the torsion bar (115) is part of a torque sensor (114) which determines the steering torque which is applied at the steering wheel and is required for actuating the electric motor (12), and wherein the step-down gear mechanism (11) and the electric motor (12) are arranged on the opposite side of the rack (5) with respect to the torque sensor (114).

5. Rack and pinion steering system according to one of the preceding claims, **characterized in that** the step-down gear mechanism (11) is a worm gear mechanism, wherein a worm gear (15) of the worm gear mechanism surrounds the pinion shaft (13) concentrically and is connected fixedly to the latter so as to rotate with it.

6. Rack and pinion steering system according to Claim 5, **characterized in that** the pinion shaft (13) is mounted rotatably in a bearing (14) in the steering gear housing (10) between the steering pinion (8) and the worm gear (15).

7. Rack and pinion steering system according to Claim 5 or 6, **characterized in that** the electric motor (12) is an electric servomotor which drives a worm shaft (16) of the worm gear mechanism.

8. Rack and pinion steering system according to one of the preceding claims, **characterized in that** the tapered portion (17) adjoins the steering pinion (8) directly on the pinion shaft (13).

## Revendications

1. Direction à crémaillère pour un véhicule automobile, comprenant un arbre de pignon (13) connecté à un arbre de direction (2), qui présente un pignon de direction (8) qui est en prise avec une crémaillère (5) supportée de manière déplaçable dans un boîtier (10) le long d'un axe longitudinal (A), pour le pivotement de roues dirigeables (70), et comprenant un moteur électrique (12) qui entraîne l'arbre de pignon (13) par le biais d'un réducteur de vitesse (11), l'arbre de direction (2), l'arbre de pignon (13) avec le pignon de direction (8) et le réducteur de vitesse (11) formant un agencement complet qui est reçu dans un boîtier du mécanisme de direction (10), le réducteur de vitesse (11) étant disposé à l'extrémité éloignée de l'arbre de direction (1300) de l'arbre de pignon (13), l'arbre de pignon (13) étant supporté entre le pignon de direction (8) et l'extrémité éloignée de l'arbre de direction (1300) dans un palier (14) de manière à pouvoir tourner dans le boîtier du mécanisme de direction (10), **caractérisée en ce que** l'arbre de pignon (13) présente entre le pignon de direction (8) et le palier (14) un rétrécissement (17) dont le diamètre est inférieur à celui du pignon de direction (8) et d'un siège de palier (140) du palier (14).

2. Direction à crémaillère selon la revendication 1, **caractérisée en ce que** le réducteur de vitesse (11) est disposé sur l'arbre de pignon (13) sous le pignon de direction (8).

3. Direction à crémaillère selon la revendication 1 ou 2, **caractérisée en ce que** le moteur électrique (12) est disposé sur le côté inférieur du mécanisme de direction (4).

4. Direction à crémaillère selon l'une quelconque des revendications précédentes, **caractérisée en ce que** l'arbre de pignon (13) est connecté au niveau de son extrémité proche de l'arbre de direction (130) à une barre de torsion (115) qui relie l'arbre de pignon (13) à un arbre d'entrée (113), la barre de torsion (115) faisant partie d'un capteur de couple (114) qui détermine le couple de direction appliqué au volant de direction, nécessaire pour la commande du moteur électrique (12), et le réducteur de vitesse (11) et le moteur électrique (12) étant disposés sur le côté de la crémaillère (5) opposé au capteur de couple (114).

5. Direction à crémaillère selon l'une quelconque des revendications précédentes, **caractérisée en ce que** le réducteur de vitesse (11) est une transmission à vis sans fin, une roue hélicoïdale (15) de la transmission à vis sans fin entourant concentriquement l'arbre de pignon (13) et étant connectée de manière solidaire en rotation à celui-ci.

6. Direction à crémaillère selon la revendication 5, **caractérisée en ce que** l'arbre de pignon (13) est supporté entre le pignon de direction (8) et la roue hélicoïdale (15) de manière rotative dans un palier (14) dans le boîtier du mécanisme de direction (10).

7. Direction à crémaillère selon la revendication 5 ou 6, **caractérisée en ce que** le moteur électrique (12) est un servomoteur électrique qui entraîne un arbre de vis sans fin (16) de la transmission à vis sans fin.

8. Direction à crémaillère selon l'une quelconque des revendications précédentes, **caractérisée en ce que** le rétrécissement (17) se raccorde directement au pignon de direction (8) sur l'arbre de pignon (13).
